(19) Europäisches Patentamt
European Patent Office
Office européen des brevets

(11) EP 0 618 239 B1

# (12) EUROPEAN PATENT SPECIFICATION

(45) Date of publication and mention of the grant of the patent:
**09.08.2000 Bulletin 2000/32**

(51) Int. Cl.$^7$: **C08F 10/02**, C08F 4/685

(21) Application number: **94200783.2**

(22) Date of filing: **25.03.1994**

## (54) Ethylene (co)polymerization process

Verfahren für Ethylenpolymerisation

Procédé de (co)polymérisation d'éthylène

(84) Designated Contracting States:
**AT BE CH DE DK ES FR GB GR IE IT LI LU MC NL PT SE**

(30) Priority: **31.03.1993 IT MI930630**

(43) Date of publication of application:
**05.10.1994 Bulletin 1994/40**

(73) Proprietor:
**Polimeri Europa S.r.l.**
**90139 Palermo (IT)**

(72) Inventors:
- **Masi, Francesco**
  **I-20097 San Donato Milanese (Milan) (IT)**
- **Calderazzo, Fausto**
  **I-56010 Ghezzano (Pisa) (IT)**
- **Menconi, Francesco**
  **I-55060 Massa Macinaia (Lucca) (IT)**
- **Pampaloni, Guido**
  **I-56025 Pontedera (Pisa) (IT)**
- **Poidomani, Marcello**
  **I-97100 Ragusa (IT)**
- **Ferrero, Cesare**
  **I-20052 Monza (Milan) (IT)**
- **Moalli, Angelo**
  **I-28053 Castelletto Ticino (Novara) (IT)**
- **Invernizzi, Renzo**
  **I-20147 Milano (IT)**
- **Monichino, Alberto**
  **I-27100 Pavia (IT)**

(74) Representative:
**Fusina, Gerolamo et al**
**Ing. Barzanò & Zanardo Milano S.p.A,**
**Via Borgonuovo, 10**
**20121 Milano (IT)**

(56) References cited:
**EP-A- 0 358 265**
**EP-A- 0 413 530**
**FR-A- 2 280 654**

EP 0 618 239 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

This invention relates to a process for ethylene polymerization and copolymerization of ethylene with an alpha-olefin, and a catalytic composition active in this (co)polymerization.

It is known in the art that ethylene, and alpha-olefins in general, can be polymerized by the Ziegler low pressure process.

For this purpose, catalysts are used generally formed from a compound of elements from group IV to group VI of the periodic table (transition metal compounds) in mixture with an organometallic compound or hydride of elements from group I to group(III of the periodic table, operating in suspension, in solution or in the gaseous phase.

The transition metal generally used for this purpose is titanium, which allows high yields and productivity especially in ethylene polymerization. However, combinations of titanium with other transition metals such as vanadium, zirconium and hafnium are also used in the preparation of ethylene polymers and copolymers with specific characteristics. In particular, the titanium-vanadium combination is often used in the preparation of ethylene copolymers with homogeneous comonomer distribution within the molecule, and having good mechanical characteristics and improved workability, especially when operating with processes using a polymerization temperature exceeding about 150°C and hence requiring catalysts with a reduced number of beta-elimination reactions. These catalyst components are generally prepared by contact, under reaction conditions, between a titanium compound (generally titanium tetrachloride), a vanadium compound (generally vanadium oxychloride) and an alkylaluminium chloride, as described for example in European patent application No. 57,050.

The main drawback of these catalytic components is their relatively low activity in polymerization, this requiring expensive purification of the polymer to remove catalyst residues.

From US patents 4,037,041 and 4,151,110 it is also known to prepare catalyst components from titanium tetrachloride and vanadium carbonyl as zerovalent vanadium compound. However these catalyst components also exhibit poor activity under usual polymerization conditions and in addition vanadium carbonyls are compounds difficult to produce and difficult to handle in a commercial plant. A polymerization catalyst containing vanadium and titanium, with good catalytic activity, is described in US patent 4,987,111. According to this patent a solid catalyst component is definable, in atomic proportions, by the formula V(1), Ti(n), Cl(4n) where n varies from 1 to 3, and is obtainable from a vanadium arene and titanium tetrachloride in accordance with the equation:

$$V(Ar)_2 + nTiCl_4 \rightarrow VTi_nCl_{4n}$$

and therefore contains vanadium and titanium in mutual molar proportions ranging from 1:1 to 1:3.

According to the present invention, it has now been found that a solid catalyst component with a higher vanadium content than that of the solid component of US patent 4,978,111 and in particular with an atomic ratio higher than the range 1:1 to 3:1 can be obtained by reacting titanium tetrachloride, a vanadium arene and vanadium tetrachloride together in suitable proportions.

It has also been found that particular classes of organic chlorine derivatives constitute highly effective promoters in ethylene (co)polymerization when used in association with said solid catalyst components with high or low vanadium content and with an alkyl aluminium compound.

It should be noted that the technical literature describes the use of certain halo-organic compounds in association with certain titanium-based Ziegler catalysts. However the addition of these halo-organic compounds to said titanium-based catalysts does not generally lead to a significant increase in productivity, whereas it results in a clear reduction in molecular weight (or equivalently an increase in melt index) of polyolefins produced in polymerization processes conducted at medium temperature (generally equal to or less than 90°C). Reference should be made for example to Pozamantir, Polymer Sci., 3, 217 (1962) and Kiepert, Macromol. Chem., 70, 54 (1965).

It is also known that certain halo-organic compounds result in productivity increases in ethylene homo- and co-polymerization processes when associated with vanadium-based catalysts. However such an effect was obtained using vanadium catalytic systems operating in homogeneous phase (so-called "soluble vanadiums"), operating at a temperature generally less than 120°C, given the difficulty encountered by vanadium when operating at high temperature due to deactivation phenomena by superreduction, and the difficulty of producing high molecular weights. See for example E. Giannetti et al., Makromol. Chem. 185, 2133 (1984); N. Kashiva et al., Polym. Bull., 13, 511 (1985); and M.V. Pandya et al., J. Appl. Polym. Sci., 43, 637 (1991).

To the knowledge of the present applicant, it is not known to use halo-organic compounds as activators for bimetallic titanium-vanadium catalytic systems operating in heterogeneous phase.

According to the present invention it has been unexpectedly found that the aforementioned heterogeneous titanium-vanadium catalysts are activated by the presence of particular chlorine derivatives, enabling a productivity improvement of up to 100% to be achieved in polymerization processes conducted at temperatures ranging from low to high (from about 30 to about 260°C), producing ethylene polymers of varying density without any molecular weight

reduction deriving from the presence of the activator. In addition in the copolymerization of ethylene with an alpha-olefin the thus activated catalysts result in a considerable improvement in the incorporation of alpha-olefinic comonomers, including higher alpha-olefins, with the additional advantage of obtaining copolymers of even very low density with a lesser quantity of comonomer fed to the reaction, with consequent process economy and simplification.

In accordance therewith, the present invention provides a process for ethylene polymerization and the copolymerization of ethylene with a $C_3$-$C_{10}$ alpha-olefin, the process being characterised by using a catalytic composition formed from:

i) a solid catalyst component (procatalyst) containing titanium, vanadium and chlorine in the following molar proportions:

Ti (1), V (0.3-3), Cl (4-12);

obtained by interacting titanium tetrachloride, a vanadium arene and possibly vanadium tetrachloride, in accordance with the reaction:

$$TiCl_4 + mV(Ar)_2 + nVCl_4 \rightarrow TiV_{(m+n)}Cl_{(4+4n)} + 2mAr$$

where:

- Ar is an arene chosen from benzene and benzene substituted with 1 to 3 alkyl groups,
- m is a number variable from 0.3 to 1,
- n is a number variable from 0 to 2,

with the condition that the ratio m:n is in the range from 1:0 to 1:2;
ii) a trialkylaluminium or alkylaluminium chloride cocatalyst; and
iii) an organic clorine derivative activator chosen from:

a) di- or poly-chloroalkanes,

- alpha,beta-dichloroalkanes, as represented by the following formula:

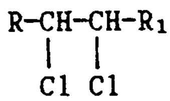

where R and $R_1$ independently represent a hydrogen atom or a $C_1$-$C_{10}$ (preferably $C_1$-$C_5$) alkyl group;
- alpha,omega-dichloroalkanes, as represented by the following formula:

$$Cl\text{-}CH_2\text{-}(CH_2)_r\text{-}CH_2\text{-}Cl$$

where r is a whole number from 1 to 10 (preferably from 1 to 5);
- trichloroalkanes or tetrachloroalkanes carrying the chlorine atoms on the two terminal carbons, as represented by the formula:

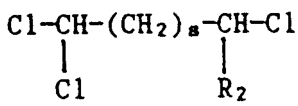

where $R_2$ represents a halogen or chlorine atom and s is a whole number from 1 to 10 (preferably 1 to 5);
- trichloroalkanes carrying the chlorine atoms on one terminal carbon, as represented by the formula:

$$(Cl)_3\text{-}C\text{-}R_3$$

where $R_3$ represents a $C_1$-$C_{10}$ (preferably $C_1$-$C_5$) alkyl group;

b) alkyl esters of aliphatic carboxylic acids di- or tri-chlorine substituted on the carbon in the alpha position relative to the carboxyl, and

c) monochloro triphenylmethane or dichloro diphenylmethane carrying a carboxyalkyl group in the para position of at least one of the phenyl rings, whereby in said catalytic composition:

- the atomic ratio of aluminium (in the cocatalyst) to the sum of titanium and vanadium (in the procatalyst), Al/(Ti+V), varies from 0.5:1 to 200:1;
- the ratio of moles of activator iii) to the sum of the titanium and vanadium atoms (in the procatalyst), (iii)/(Ti+V), varies from 0.3:1 to 3:1;
- the ratio of moles of activator iii) to atoms of aluminium (in the cocatalyst), (iii)/Al, varies from 0.01:1 to 10:1.

<u>Procatalyst</u>

The procatalyst i) according to the present invention is a solid catalyst component containing titanium, vanadium and chlorine in the aforestated proportions, obtained by interacting titanium tetrachloride, a vanadium arene and possibly vanadium tetrachloride. Vanadium arenes usable for this purpose are zerovalent vanadium compounds, generally definable by the formula $V(Ar)_2$ where Ar indicates preferably benzene, toluene, p-xylene or mesitylene, the most preferred being mesitylene. These vanadium arenes are compounds known in the art and can be prepared for example by the procedures described by E.O, Fisher and H.S. Kogler in Chem. Ber., 90, 250 (1957) and by F. Calderazzo in Inorg. Chem. 3, 810, 1964, and in US patents 4,980,491 and 5,093,508.

The procatalyst i) can be formed outside the polymerization environment or within it. In the first case a vanadium arene solution is normally brought into contact with a solution containing the titanium tetrachloride and possibly also the vanadium tetrachloride. Solvents suitable for the purpose are non-reactive inert organic solvents, preferably hydrocarbon solvents, such as nonane, decane, undecane or cyclohexane. The process is normally conducted in an inert atmosphere (for example in a nitrogen or argon atmosphere), agitating the mass at ambient temperature (20-25°C) or at higher than ambient temperature, for example up to approximately the boiling point of the solvent used, for a time of between 10 seconds and 3 hours, and preferably at ambient temperature for about 1 hour, to precipitate the procatalyst in the form of solid granules. The procatalyst dispersion in the relative solvent obtained in this manner can be used directly in the ethylene (co)polymerization process.

Alternatively the procatalyst can be previously separated from its dispersion, washed with a hydrocarbon organic solvent (for example pentane, hexane or heptane) and dried.

According to another embodiment, particularly suitable for continuous polymerization processes, the procatalyst i) is formed or essentially formed within the polymerization environment. In this case a stream of the solution of vanadium arene and a stream of the solution of titanium tetrachloride and possibly also of the vanadium tetrachloride in their relative organic solvents are mixed together in a suitable ratio and the mixture fed to the polymerization reactor. It has been found that a mixing time of the order of a few seconds, for example 10 seconds, is sufficient.

Specific examples of the procatalyst i) according to the present invention, defined on the basis of the atomic proportions of the vanadium, titanium and chlorine constituents, are as follows:

Ti (1), V (0.3), Cl (4);
Ti (1), V (0.5), Cl (4);
Ti (1), V (1), Cl (4);
Ti (1), V (2), Cl (8);
Ti (1), V (3), Cl (12).

The first three of these procatalyst examples can be obtained by reacting the vanadium arene with titanium tetrachloride, and the second three by interacting the vanadium arene with titanium tetrachloride and vanadium tetrachloride.

<u>Cocatalyst</u>

The cocatalyst used in the catalytic composition of the present invention is a trialkylaluminium or an alkylaluminium chloride containing in the alkyl portion between 1 and 8 and preferably between 1 and 4 carbon atoms. Examples of cocatalysts suitable for this purpose are triethylaluminium, tri-n-butylaluminium, triisobutyl aluminium, dimethylaluminium chloride, diethylaluminium monochloride, monoethylaluminium dichloride and ethylaluminium sesquichloride. Of these cocatalysts, triethylaluminium is preferred.

Activator

The activator iii) used in the catalytic composition of the present invention is an organic clorine derivative chosen from the following compound classes:

a) di-or-poly-chloroalkanes,
b) alkyl esters of aliphatic carboxylic acids di- or trichlorine substituted on the carbon in the alpha position relative to the carboxyl, and
c) monochloro triphenylmethane or dichloro diphenylmethane carrying a carboxyalkyl group in the para position of at least one of the phenyl rings.

Activators a) usable for the purpose are to be chosen from:

- alpha, beta-dichloroalkanes, as represented by the following formula:

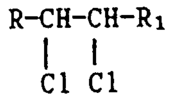

  where R and $R_1$ independently represent a hydrogen atom or a $C_1$-$C_{10}$ (preferably $C_1$-$C_5$) alkyl group;
- alpha, omega-dichloroalkanes, as represented by the following formula:

$$Cl\text{-}CH_2\text{-}(CH_2)_r\text{-}CH_2\text{-}Cl$$

  where r is a whole number from 1 to 10 (preferably from 1 to 5);
- trichloroalkanes or tetrachloroalkanes carrying the chlorine atoms on the two terminal carbons, as represented by the formula:

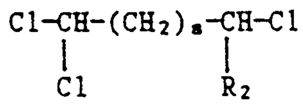

  where $R_2$ represents a halogen or chlorine atom and s is a whole number from 1 to 10 (preferably 1 to 5);
- trichloroalkanes carrying the chlorine atoms on one terminal carbon, as represented by the formula:

$$(Cl)_3\text{-}C\text{-}R_3$$

  where $R_3$ represents a $C_1$-$C_{10}$ (preferably $C_1$-$C_5$) alkyl group;

Specific examples of activators a) are 1,2-dichloroethane, 1,3-trichloro-propane, 1,4-dichlorobutane, 2,3-dichlorobutane, 1,4-dichloro-pentane, 1,6-dichlorohexane, 1,1,1-trichloroethane and 1,1,2-trichloroethane. Of these activators, 1,2-dichloroethane and 2,3-dichlorobutane are preferred.
Activators b) usable for the purpose can be chosen from those definable by the formula:

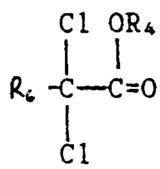

where $R_6$ represents a hydrogen atom, a chlorine atom or a $C_1$-$C_{10}$ (preferably $C_1$-$C_5$) alkyl group, and $R_4$ represents a $C_1$-$C_{10}$ (preferably $C_1$-$C_5$) alkyl group.
Specific examples of activators b) are the methyl and ethyl esters of 1,1-dichloroacetic and 1,1,1-trichloroacetic acid.

Activators c) usable for the purpose can be chosen from those definable by the formula:

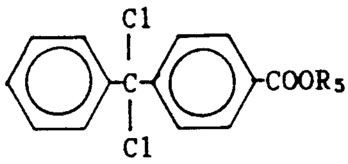

and

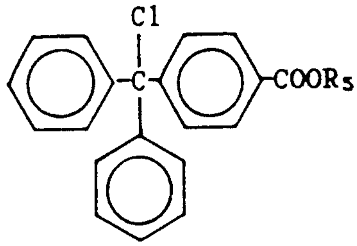

where $R_5$ represents a $C_1$-$C_{10}$ (preferably $C_1$-$C_5$) alkyl group.

Specific examples of activators c) are those corresponding to the aforesaid formula in which $R_5$ represents the methyl or ethyl group.

The activator iii) can be added to the polymerization environment either as a separate feed or jointly with the cocatalyst ii) or with the procatalyst i) or with the precursors of said cocatalyst i), as already indicated. According to a particular embodiment, the activator iii) is introduced into the procatalyst i) during the preparation of said procatalyst i) by contact with the reagents vanadium arene, titanium tetrachloride and possibly vanadium tetrachloride.

<u>Catalytic composition</u>

The catalytic composition according to the present invention generally contains the components i), ii) and iii) in proportions such as to satisfy the following ratios:

- atomic ratio of aluminium (in the cocatalyst) to the sum of titanium and vanadium (in the procatalyst), Al/(Ti+V), between 0.5:1 and 200:1;
- ratio of moles of activator iii) to the sum of the titanium and vanadium atoms (in the procatalyst), (iii)/(Ti+V), between 0.3:1 and 3:1;
- ratio of moles of activator iii) to atoms of aluminium (in the cocatalyst), iii)/Al, between 0.01:1 and 10:1.

The catalytic composition of the present invention is active in the polymerization of ethylene, and in the copolymerization of ethylene with a $C_3$-$C_{10}$ alpha olefin.

When operating with the method of polymerization in suspension in an inert diluent (temperature between 30 and 95°C), it is preferable to use the composition components in such proportions as to fall within the following ranges:

| | |
|---|---|
| Al/(Ti+V) | from 6:1 to 16:1 |
| (iii)/(Ti+V) | from 1.5:1 to 3:1 |
| (iii)/Al | from 0.1:1 to 1:1. |

When operating with the method of polymerization in solution (temperature between about 140 and 260°C), it is preferable to use said components in such proportions as to fall within the following ranges:

| | |
|---|---|
| Al/(Ti+V) | from 2:1 to 3:1 |
| (iii)/(Ti+V) | from 0.3:1 to 2:1 |
| (iii)/Al | from 0.6:1 to 6:1. |

When copolymerizing ethylene with an alpha-olefin using the solution method at a temperature of between about 0 and 100°C, it is preferable to use said components in such proportions as to fall within the following ranges:

| | |
|---|---|
| Al/(Ti+V) | from 10:1 to 200:1 |
| (iii)/(Ti+V) | from 1.5:1 to 3:1 |
| (iii)/Al | from 0.01:1 to 0.3:1. |

In ethylene homopolymerization the catalytic composition of the present invention enables polymers to be obtained with a average to wide molecular weight distribution, particularly suitable for conversion by methods such as blow moulding for use in the manufacture of film and miscellaneous articles, and by injection moulding. In ethylene

copolymerization with alpha-olefins, in particular 1-butene and 1-hexene, the catalytic composition of the present invention enables low-density linear polyethylenes to be obtained, particularly suitable for conversion by methods such as blow moulding and injection moulding, depending on the molecular weight distribution, or copolymers with a high propylene content possessing elastomeric properties to be obtained.

In all cases the catalytic composition of the present invention exhibits an unexpectedly high polymerization and copolymerization activity, compared with titanium and vanadium based catalysts of the known art, as will be apparent from the following experimental examples, given as non-limiting illustration of the present invention.

EXAMPLE 1 (preparative)

1 g (3.435 mmoles) of vanadium bis-mesitylene is dissolved in 100 ml of anhydrous n-decane, operating in a 250 ml agitated reactor in a nitrogen atmosphere. 50 ml of a solution of anhydrous n-decane containing 1.30 g (6.852 mmoles) of titanium tetrachloride (Ti/V molar ratio = 2/1) are then added at a temperature of 25°C. The suspension obtained in this manner is maintained under intense agitation for 1 hour at 25°C.

For the purposes of analysis, one half of the suspension is filtered and the separated solid is washed with 3 x 50 ml portions of anhydrous n-hexane and dried. 0.90 g of a solid catalyst component are obtained containing 18.22 wt% Ti, 9.68 wt% V, 53.15 wt% Cl, 18.95 wt% organic fraction.

Expressing the components as molar proportions gives Ti:V:Cl = 2:1:7.9.

EXAMPLE 2 (preparative)

1 g (3.435 mmoles) of vanadium bis-mesitylene is dissolved in 100 ml of anhydrous n-decane, operating in a 250 ml agitated reactor in a nitrogen atmosphere. 50 ml of a solution of anhydrous n-decane containing 1.30 g (6.852 mmoles) of titanium tetrachloride and 2.54 g (25.66 mmoles) of 1,2-dichloroethane (1,2-DCE) (molar ratios: Ti/V = 2/1, 1,2-DCE/(Ti+V) = 2.5/1). The suspension obtained in this manner is maintained under intense agitation for 1 hour at 25°C.

For the purposes of analysis, one half of the suspension is filtered and the separated solid is washed with 3 x 50 ml portions of anhydrous n-hexane and dried. 0.81 g of a solid catalyst component are obtained containing 20.13 wt% Ti, 10.67 wt% V, 59.45 wt% Cl, 9.75 wt% organic fraction.

Expressing the components as molar proportions gives Ti:V:Cl = 2:1:8.

EXAMPLE 3 (preparative)

1 g (3.435 mmoles) of vanadium bis-mesitylene is dissolved in 100 ml of anhydrous n-decane, operating in a 250 ml agitated reactor in a nitrogen atmosphere. 50 ml of a solution of anhydrous n-decane containing 0.65 g (3.426 mmoles) of titanium tetrachloride and 0.66 g (3.424 mmoles) of vanadium tetrachloride (Ti/V molar ratio = 0.5/1) are then added at a temperature of 25°C. The suspension obtained in this manner is maintained under intense agitation for 1 hour at 25°C.

For the purposes of analysis, one half of the suspension is filtered and the separated solid is washed with 3 x 50 ml portions of anhydrous n-hexane and dried. 0.98 g of a solid catalyst component are obtained containing 8.43 wt% Ti, 17.89 wt% V, 48.66 wt% Cl, 25 wt% organic fraction.

Expressing the components as molar proportions gives Ti:V:Cl = 1:2:7.8.

EXAMPLE 4 (preparative)

1 g (3.435 mmoles) of vanadium bis-mesitylene is dissolved in 100 ml of anhydrous n-decane, operating in a 250 ml agitated reactor in a nitrogen atmosphere. 50 ml of a solution of anhydrous n-decane containing 0.65 g (3.426 mmoles) of titanium tetrachloride, 0.66 g (3.424 mmoles) of vanadium tetrachloride and 2.54 g (25.66 mmoles) of 1,2-dichloroethane (1,2-DCE) (molar ratios:Ti/V=0.5/1, 1,2-DCE/(Ti+V)=2.5/1) are then added at a temperature of 25°C. The suspension obtained in this manner is maintained under intense agitation for 1 hour at 25°C. For the purposes of analysis, one half of the suspension is filtered and the separated solid is washed with 3 x 50 ml portions of anhydrous n-hexane and dried. 0.82 g of a solid catalyst component are obtained containing 10 wt% Ti, 21.2 wt% V, 59.08 wt% Cl, 9.7 wt% organic fraction.

Expressing the components as molar proportions gives Ti:V:Cl = 1:2:8.

EXAMPLE 5 (preparative)

1 g (3.435 mmoles) of vanadium bis-mesitylene is dissolved in 100 ml of anhydrous n-decane, operating in

a 250 ml agitated reactor in a nitrogen atmosphere. 16 ml of a solution of anhydrous n-decane containing 0.65 g (3.426 mmoles) of titanium tetrachloride (Ti/V molar ratio = 1/1) are then added at a temperature of 25°C.

The suspension obtained in this manner is maintained under intense agitation for 1 hour at 25°C.

For the purposes of analysis, one half of the suspension is filtered and the separated solid is washed with 3 x 50 ml portions of anhydrous n-hexane and dried. 0.666 g of a solid catalyst component are obtained containing 12.32 wt% Ti, 13.06 wt% V, 34.58 wt% Cl, 40.04 wt% organic fraction.

Expressing the components as molar proportions gives Ti:V:Cl = 1:1:3.8.

EXAMPLE 6 (preparative)

1 g (3.435 mmoles) of vanadium bis-mesitylene is dissolved in 100 ml of anhydrous n-decane, operating in a 250 ml agitated reactor in a nitrogen atmosphere. 16 ml of a solution of anhydrous n-decane containing 0.65 g (3.426 mmoles) of titanium tetrachloride and 1.58 g (15.96 mmoles) of 1,2-dichloroethane (1,2-DCE) (molar ratios: Ti/V = 1/1, 1,2-DCE/(Ti+V) = 2.5/1) are then added at a temperature of 25°C. The suspension obtained in this manner is maintained under intense agitation for 1 hour at 25°C.

For the purposes of analysis, one half of the suspension is filtered and the separated solid is washed with 3 x 50 ml portions of anhydrous n-hexane and dried. 0.54 g of a solid catalyst component are obtained containing 15.18 wt% Ti, 16.09 wt% V, 44.8 wt% Cl, 23.93 wt% organic fraction.

Expressing the components as molar proportions gives Ti:V:Cl = 1:1:4.

EXAMPLE 7 (comparison)

1900 ml of anhydrous n-heptane, 0.120 g of triethylaluminium and 50 g of anhydrous 1-hexene are fed in that order into a 5 litre agitated reactor (pressure vessel). The reactor temperature is raised to 155°C, the reactor pressurized with ethylene to 5 $kg/cm^2$ and 0.0137 g of the solid catalyst component of Example 1 are fed in. The Al/(Ti+V) molar ratio is hence 13/1.

Polymerization is effected at 155°C for 20 minutes, maintaining the pressure at 5 $kg/cm^2$ by continuously feeding ethylene. After this time the polymerization is interrupted by introducing 2 ml of ethanol and 12 g of $CO_2$. The contents are cooled to ambient temperature and the suspension coagulated with 4000 ml of methanol. After filtering and drying the solid cake, 12.5 g of ethylene/hexene copolymer are recovered, with the following values applying:

- productivity = 0.91, expressed as kg of copolymer per gram of solid catalyst component,
- yield (Ti) = 5.0, expressed as kg of copolymer per gram of titanium in the solid catalyst component,
- yield (V) = 9.6, expressed as kg of copolymer per gram of vanadium in the solid catalyst component.

The copolymer produced in this manner has the following characteristics:

- melt index: 0.12 g/10 min
(ASTM D-1238 F)
- shear sensitivity: 20
(ASTM D-1238 F)
- density: 0.9300 g/ml
(ASTM D-2830)

EXAMPLE 8

The procedure of Example 7 is followed, feeding the reactor with 1900 ml of anhydrous n-heptane, 0.120 g of triethylaluminium (TEA), 0.018 g of 1,2-dichloroethane (DCE), 50 g of anhydrous 1-hexene and 0.0137 g of the solid catalyst component of Example 1. The Al/(Ti+V) molar ratio is 13/1, the DCE/(Ti+V) molar ratio is 2.4/1 and the DCE/TEA molar ratio is 0.18/1.

Polymerization is effected as in Example 7, to obtain 33 g of ethylene/hexene copolymer, with productivity 2.4, yield (Ti) 13. 2 and yield (V) 25.4.

The copolymer has the following characteristics: melt index 0.38 g/10 min, shear sensitivity 20, and density 0.9215 g/ml.

EXAMPLE 9

The procedure of Example 7 is followed, feeding the reactor with 1900 ml of anhydrous n-heptane, 0.120 g

of triethylaluminium (TEA), 0.10 g of 1,2-dichloroethane (DCE), 50 g of anhydrous 1-hexene and 0.0137 g of the solid catalyst component of Example 1. The Al/(Ti+V) molar ratio is 13/1, the DCE/(Ti+V) molar ratio is 13/1 and the DCE/TEA molar ratio is 1/1.

Polymerization is effected as in Example 7, to obtain 40 g of ethylene/hexene copolymer, with productivity 2.9, yield (Ti) 16 and yield (V) 31.

The copolymer has the following characteristics: melt index 0.60 g/10 min, shear sensitivity 18, and density 0.9175 g/ml.

EXAMPLE 10

1900 ml of anhydrous n-heptane, 0.120 g of triethylaluminium and 50 g of anhydrous 1-hexene are fed in that order into a 5 litre agitated reactor (pressure vessel). The reactor temperature is raised to 155°C, the reactor pressurized with ethylene to 5 kg/cm$^2$ and a suspension obtained by dispersing 0.0143 g of the solid catalyst component of Example 1 in 3 ml of anhydrous heptane, adding 0.050 g of 1,2-dichloroethane (DCE) and maintaining contact for 1 hour at ambient temperature is fed in.

The Al/(Ti+V) molar ratio is 12.6/1, the DCE/TEA molar ratio is 0.5/1 and the DCE/(Ti+V) molar ratio is 6.3 /1.

Polymerization is effected as in Example 7, to obtain 39 g of ethylene/hexene copolymer, with productivity 2.7, yield (Ti) 14.9 and yield (V) 28.8.

The copolymer has the following characteristics: melt index 0.53 g/10 min, shear sensitivity 17.5, and density 0.9190 g/ml.

EXAMPLE 11

The procedure of Example 10 is followed, using a suspension obtained by dispersing 0.0137 g of the solid catalyst component of Example 1 in 3 ml of anhydrous heptane, adding 0.063 g of 1,4-dichlorobutane (DCB) and maintaining contact for 1 hour at ambient temperature.

The Al/(Ti+V) molar ratio is 13/1, the DCB/TEA molar ratio is 0.5/1 and the DCB/(Ti+V) molar ratio is 6.5/1.

Polymerization is effected as in Example 7, to obtain 34 g of ethylene/hexene copolymer, with productivity 2.5, yield (Ti) 13.6 and yield (V) 26.2.

The copolymer has the following characteristics: melt index 0.31 g/10 min, shear sensitivity 18, and density 0.9170 g/ml.

EXAMPLE 12

The procedure of Example 10 is followed, using a suspension obtained by dispersing 0.0137 g of the solid catalyst component of Example 1 in 3 ml of anhydrous heptane, adding 0.063 g of 1,6-dichlorohexane (DCHE) and maintaining contact for 1 hour at ambient temperature.

The Al/(Ti+V) molar ratio is 13/1, the DCHE/TEA molar ratio is 0.5/1 and the DCHE/(Ti+V) molar ratio is 6.3/1.

Polymerization is effected as in Example 7, to obtain 20 g of ethylene/hexene copolymer, with productivity 1.5, yield (Ti) 8.0 and yield (V) 15.4.

The copolymer has the following characteristics: melt index 0.31 g/10 min, shear sensitivity 19, and density 0.9270 g/ml.

EXAMPLE 13 (comparative)

The procedure of Example 10 is followed, using a suspension obtained by dispersing 0.0137 g of the solid catalyst component of Example 1 in 3 ml of anhydrous heptane, adding 0.042 g of 1,6-dichloromethane (DCM) and maintaining contact for 1 hour at ambient temperature.

The Al/(Ti+V) molar ratio is 13/1, the DCM/TEA molar ratio is 0.5/1 and the DCM/(Ti+V) molar ratio is 6.3/1.

Polymerization is effected as in Example 7, to obtain 10.1 g of ethylene/hexene copolymer, with productivity 0.70, yield (Ti) 4.0 and yield (V) 7.8.

The copolymer has the following characteristics: melt index 0.40 g/10 min, shear sensitivity 19, and density 0.9260 g/ml.

EXAMPLE 14

The procedure of Example 7 is followed, using a fraction of the catalytic suspension obtained in Example 2

containing 0.0124 g of solid catalyst component.

The Al/(Ti+V) molar ratio is 13/1.

25 g of ethylene/hexene copolymer are obtained, with productivity 2.0, yield (Ti) 10 and yield (V) 18.9.

The copolymer has the following characteristics: melt index 0.21 g/10 min, shear sensitivity 20, and density 0.9265 g/ml.

EXAMPLE 15 (comparison)

1900 ml of anhydrous n-heptane, 0.120 g of triethylaluminium and 50 g of anhydrous 1-hexene are fed in that order into a 5 litre agitated reactor (pressure vessel). The reactor temperature is raised to 155°C, the reactor pressurized with ethylene to 5 kg/cm$^2$ and 0.0232 g of the solid catalyst component of Example 3 are fed in.

The Al/(Ti+V) molar ratio is 8.2/1.

Polymerization is effected as in Example 7, to obtain 36 g of ethylene/hexene copolymer, with productivity 1.55, yield (Ti) 18.4 and yield (V) 8.7.

The copolymer has the following characteristics: melt index 0.15 g/10 min, shear sensitivity 20, and density 0.9230 g/ml.

EXAMPLE 16

The procedure of Example 15 is followed, feeding 1900 ml of anhydrous n-heptane, 0.120 g of triethylaluminium, 0.018 g of 1,2-dichloroethane (DCE), 50 g of anhydrous 1-hexene and 0.0232 g of the solid catalyst component of Example 3 into the reactor.

The Al/(Ti+V) molar ratio is 8.2/1, the DCE/(Ti+V) molar ratio is 1.5/1 and the DCE/Al molar ratio is 1.5/1.

Polymerization is effected as in Example 7, to obtain 62 g of ethylene/hexene copolymer, with productivity 2.64, yield (Ti) 31.6 and yield (V) 14.9.

The copolymer has the following characteristics: melt index 0.41 g/10 min, shear sensitivity 17 , and density 0.9120 g/ml.

EXAMPLE 17

The procedure of Example 15 is followed, feeding 1900 ml of anhydrous n-heptane, 0.120 g of triethylaluminium, 0.050 g of 1,2-dichloroethane (DCE), 50 g of anhydrous 1-hexene and 0.0193 g of the solid catalyst component of Example 3 into the reactor.

The Al/(Ti+V) molar ratio is 9.8/1, the DCE/(Ti+V) molar ratio is 4.9/1 and the DCE/Al molar ratio is 0.5/1.

Polymerization is effected as in Example 7, to obtain 55 g of ethylene/hexene copolymer, with productivity 2.84, yield (Ti) 34 and yield (V) 15.9.

The copolymer has the following characteristics: melt index 0.43 g/10 min, shear sensitivity 17.5, and density 0.9150 g/ml.

EXAMPLE 18

The procedure of Example 15 is followed, feeding 1900 ml of anhydrous n-heptane, 0.120 g of triethylaluminium, 0.100 g of 1,2-dichloroethane (DCE), 50 g of anhydrous 1-hexene and 0.0193 g of the solid catalyst component of Example 3 into the reactor.

The Al/(Ti+V) molar ratio is 9.8/1, the DCE/(Ti+V) molar ratio is 9.8/1 and the DCE/Al molar ratio is 1/1.

Polymerization is effected as in Example 7, to obtain 51 g of ethylene/hexene copolymer, with productivity 2.64, yield (Ti) 31.5 and yield (V) 14.7.

The copolymer has the following characteristics: melt index 0.34 g/10 min, shear sensitivity 17.5, and density 0.9140 g/ml.

EXAMPLE 19

The procedure of Example 15 is followed, feeding 1900 ml of anhydrous n-heptane, 0.120 g of triethylaluminium, 0.036 g of 1,1,1-trichloroethane (TCE), 50 g of anhydrous 1-hexene and 0.0193 g of the solid catalyst component of Example 3 into the reactor.

The Al/(Ti+V) molar ratio is 9.8/1, the TCE/(Ti+V) molar ratio is 1.9/1 and the TCE/Al molar ratio is 0.19/1.

Polymerization is effected as in Example 7, to obtain 37 g of ethylene/hexene copolymer, with productivity 1.92, yield (Ti) 22.8 and yield (V) 10.7.

The copolymer has the following characteristics: melt index 0.12 g/10 min, shear sensitivity 18, and density 0.9190 g/ml.

EXAMPLE 20

The procedure of Example 15 is followed, using a fraction of the catalytic suspension obtained in Example 4 containing 0.0170 g of solid catalyst component.
The Al/(Ti+V) molar ratio is 9.4/1.
45 g of ethylene/hexene copolymer are obtained, with productivity 2.6, yield (Ti) 26.5 and yield (V) 12.5.
The copolymer has the following characteristics: melt index 0.27 g/10 min, shear sensitivity 19, and density 0.9185 g/ml.

EXAMPLE 21 (comparison)

1900 ml of anhydrous n-heptane, 0.120 g of triethylaluminium and 50 g of anhydrous 1-hexene are fed in that order into a 5 litre agitated reactor (pressure vessel). The reactor temperature is raised to 155°C, the reactor pressurized with ethylene to 5 $kg/cm^2$ and 0.0198 g of the solid catalyst component of Example 5 are fed in. The Al/(Ti+V) molar ratio is 9.2/1.
Polymerization is effected as in Example 7, to obtain 15 g of ethylene/hexene copolymer, with productivity 0.76, yield (Ti) 6.1 and yield (V) 5.6.
The copolymer has the following characteristics: melt index 0.14 g/10 min., shear sensitivity 18, and density 0.9303 g/ml.

EXAMPLE 22

The procedure of Example 21 is followed, feeding 1900 ml of anhydrous n-heptane, 0.120 g of triethylaluminium, 0.050 g of 1,2-dichloroethane (DCE), 50 g of anhydrous 1-hexene and 0.0137 g of the solid catalyst component of Example 3 into the reactor.
The Al/(Ti+V) molar ratio is 13/1, the DCE/(Ti+V) molar ratio is 6.6/1 and the DCE/Al molar ratio is 0.5/1.
Polymerization is effected as in Example 7, to obtain 40 g of ethylene/hexene copolymer, with productivity 2.9, yield (Ti) 23.7 and yield (V) 22.3.
The copolymer has the following characteristics: melt index 0.34 g/10 min, shear sensitivity 19, and density 0.9195 g/ml.

EXAMPLE 23

The procedure of Example 21 is followed, using a fraction of the catalytic suspension obtained in Example 6 containing 0.0151 g of solid catalyst component.
The Al/(Ti+V) molar ratio is 9.2/1.
59 g of ethylene/hexene copolymer are obtained, with productivity 3.9, yield (Ti) 25.6 and yield (V) 24.2.
The copolymer has the following characteristics: melt index 0.44 g/10 min, shear sensitivity 17, and density 0.9190 g/ml.

EXAMPLE 24 (comparative)

An agitated reactor for continuous operation, of 120 ml volume, is used provided with inlets for feeding the various components by a system of metering pumps comprising throughput control.
The following streams are fed into the reactor:

a) 1.78 l/hour of a solution of ethylene in cyclohexane (112.5 g/hour of ethylene),
b) 300 ml/hour of a solution of titanium tetrachloride in cyclohexane (1.6 mg/hour of titanium, 0.72 ppm on the total feed to the reactor),
c) 300 ml/hour of a solution of vanadium bis-mesitylene in cyclohexane (0.85 mg/hour of vanadium, 0.38 ppm on the total feed to the reactor),
streams b) and c) being fed through two separate lines and joining before entry to the reactor into a single line, where with a residence time of about 60 seconds the catalyst forms, this being fed to the reactor,
d) 300 ml/hour of a solution containing 11.4 mg of triethylaluminium.

The total feed to the reactor is 2.68 l/hour. The molar ratios are Al/Ti = 3.0/1, Al/V = 6/1 and Al/(Ti+V) = 2/1. The operating temperature is 230°C, the pressure 125 bar and the residence time 1.7 minutes.

Under these conditions 49 g/hour of an ethylene polymer are obtained, corresponding to an ethylene conversion of 43.5%, with productivity 4.43, yield (Ti) 30.66 and yield (V) 57.5.

The polyethylene has the following characteristics: melt index 0.09 g/10 min, shear sensitivity 26.78, and density 0.9488 g/ml.

EXAMPLE 25

The procedure of Example 24 is followed, with the difference that 300 ml/hour of a solution of dichloroethane (DCE) in cyclohexane (2.97 mg/of dichloroethane) are additionally fed into the triethylaluminium (TEA) line. The point of introduction into the triethylaluminium line is about 10 seconds from the point of introduction into the reactor. The DCE/TEA molar ratio is 0.3/1 and the DCE/(Ti+V) molar ratio is 0.6/1.

Polymerizing at 236°C, 112 g/hour of an ethylene polymer are obtained, corresponding to an ethylene conversion of 99%, with productivity 10, yield (Ti) 69.7 and yield (V) 130.

The polyethylene has the following characteristics: melt index 0.2 g/10 min, shear sensitivity 41.73, and density 0.9520 g/ml.

EXAMPLE 26

The procedure of Example 24 is followed, with the difference that 300 ml/hour of a solution of dichloroethane (DCE) in cyclohexane (9.9 mg/of dichloroethane) are additionally fed into the triethylaluminium (TEA) line, with a DCE/TEA molar ratio of 1/1 and a DCE/(Ti+V) molar ratio of 2/1.

Polymerizing at 238°C, 74 g/hour of an ethylene polymer are obtained, corresponding to an ethylene conversion of 65%, with productivity 6.32, yield (Ti) 44 and yield (V) 82.

The polyethylene has the following characteristics: melt index 0.17 g/10 min, shear sensitivity 31, and density 0.9518 g/ml.

EXAMPLE 27

The procedure of Example 24 is followed, with the difference that 300 ml/hour of a solution of dichloroethane (DCE) in cyclohexane (9.9 mg/h dichloroethane) are additionally fed into the triethylaluminium (TEA) line, with a DCE/TEA molar ratio of 2/1 and a DCE/(Ti+V) molar ratio of 4/1.

Polymerizing at 245°C, 41.62 g/hour of an ethylene polymer are obtained, corresponding to an ethylene conversion of 37%, with productivity 3.8, yield (Ti) 26 and yield (V) 49.3.

The polyethylene has the following characteristics: melt index 0.28 g/10 min, shear sensitivity 29, and density 0.9523 g/ml.

EXAMPLE 28 (comparison)

The procedure of Example 24 is followed, but feeding 300 ml/hour of a solution containing 17.1 mg of triethylaluminium. The molar ratios are hence Al/Ti = 4.5/1, Al/V = 9/1 and Al/(Ti+V) = 3/1. Polymerizing at 230°C, 33.7 g/hour of an ethylene polymer are obtained, corresponding to an ethylene conversion of 30%, with productivity 3, yield (Ti) 21 and yield (V) 40.

The polyethylene has the following characteristics: melt index 0.13 g/10 min, shear sensitivity 23.7, and density 0.9436 g/ml.

EXAMPLE 29

The procedure of Example 28 is followed, with the difference that 300 ml/hour of a solution of dichloroethane (DCE) in cyclohexane (14.9 mg/h dichloroethane) are additionally fed into the triethylaluminium (TEA) line. The point of introduction into the triethylaluminium line is about 10 seconds from the point of introduction into the reactor. The DCE/TEA molar ratio is 1/1 and the DCE/(Ti+V) molar ratio is 3/1.

Polymerizing at 238°C, 34.87 g/hour of an ethylene polymer are obtained, corresponding to an ethylene conversion of 31%, with productivity 3.13, yield (Ti) 21.7 and yield (V) 40.7.

The polyethylene has the following characteristics: melt index 0.24 g/10 min, shear sensitivity 23.6, and density 0.9466 g/ml.

EXAMPLE 30

The procedure of Example 28 is followed, with the difference that 300 ml/hour of a solution of dichloroethane (DCE) in cyclohexane (29.7 mg/h dichloroethane) are additionally fed into the triethylaluminium (TEA) line. The point of introduction into the triethylaluminium line is about 10 seconds from the point of introduction into the reactor. The DCE/TEA molar ratio is 2/1 and the DCE/(Ti+V) molar ratio is 6/1.
Polymerizing at 244°C, 15.18 g/hour of an ethylene polymer are obtained, corresponding to an ethylene conversion of 13.5%, with productivity 1.4, yield (Ti) 9.5 and yield (V) 17.8.
The polyethylene has the following characteristics: melt index 0.15 g/10 min, shear sensitivity 25.8, and density 0.9492 g/ml.

EXAMPLE 31 (comparison)

The procedure of Example 24 is followed, but additionally feeding 300 ml/hour of a solution of 1-butene in hexane (225 g/hour of butene, butene/ethylene weight ratio 2/1) into the reactor through a separate line.
Copolymerizing at 225°C, 47.5 g/hour of an ethylene/butene copolymer are obtained, corresponding to a ethylene conversion of 38%, with copolymer productivity 19.38, yield (Ti) 29.68 and yield (V) 55.88.
The copolymer has the following characteristics: melt index 0.75 g/10 min, shear sensitivity 22, and density 0.9205 g/ml.

EXAMPLE 32

The procedure of Example 31 is followed, with the difference that 300 ml/hour of a solution of dichloroethane (DCE) in cyclohexane (2.97 mg/h dichloroethane) are additionally fed into the triethylaluminium (TEA) line. The point of introduction into the triethylaluminium line is about 10 seconds from the point of introduction into the reactor. The DCE/TEA molar ratio is 0.3/1 and the DCE/(Ti+V) molar ratio is 0.6/1.
Copolymerizing at 231°C, 104.5 g/hour of an ethylene/butene copolymer are obtained, corresponding to a ethylene conversion of 82%, with copolymer productivity 42.65, yield (Ti) 65.31 and yield (V) 123.
The copolymer has the following characteristics: melt index 1.4 g/10 min, shear sensitivity 26, and density 0.9087 g/ml.

EXAMPLE 33

The procedure of Example 31 is followed, with the difference that 300 ml/hour of a solution of dichloroethane (DCE) in cyclohexane (4/95 mg/h dichloroethane) are additionally fed into the triethylaluminium (TEA) line. The DCE/TEA molar ratio is 0.5/1 and the DCE/(Ti+V) molar ratio is 1/1.
In addition, 300 ml/hour of a solution of 1-butene in hexane, corresponding to 184 g/hour of butene (butene/ethylene weight ratio 1.65/1) are fed into the reactor through a separate line.
Copolymerizing at 229°C, 111 g/hour of a ethylene/butene copolymer are obtained, corresponding to a ethylene conversion of 91%, with copolymer productivity 45.3, yield (Ti) 69.37 and yield (V) 130.5.
The copolymer has the following characteristics: melt index 1.0 g/10 min, shear sensitivity 23, and density 0.9195 g/ml.

EXAMPLE 34 (comparison)

An agitated reactor for continuous operation, of 120 ml volume, is used provided with inlets for feeding the various components by a system of metering pumps comprising throughput control. The following streams are fed into the reactor:

a) 1.78 l/hour of a solution of ethylene in cyclohexane (112.5 g/hour of ethylene),
b) 300 ml/hour of a solution of titanium tetrachloride in cyclohexane (0.56 mg/hour of titanium, 0.2679 ppm on the total feed to the reactor),
c) 300 ml/h of a solution of vanadium bis-mesitylene in cyclohexane (0.595 mg/hour of vanadium, 0.282 ppm on the total feed to the reactor),
d) 300 ml/hour of a solution of vanadium tetrachloride in cyclohexane (0.595 mg/hour of vanadium, 0.282 ppm on the total feed to the reactor),
streams b), c) and d) being fed through two separate lines and joining before entry to the reactor into a single line, where with a residence time of about 30 seconds the catalyst forms, this being fed to the reactor,

e) 300 ml/hour of a solution containing 8 mg of triethylaluminium.

The molar ratios are Al/Ti = 6/1, Al/V = 3/1 and Al/(Ti+V) = 2/1.

The operating temperature is 235°C, the pressure 125 bar and the residence time 1.7 minutes.

Under these conditions 56.25 g/hour of an ethylene polymer are obtained, corresponding to an ethylene conversion of 50%, with productivity 7.19, yield (Ti) 100.44 and yield (V) 47.66.

The polyethylene has the following characteristics: melt index 0.06 g/10 min, shear sensitivity 22, and density 0.9477 g/ml.

EXAMPLE 35

The procedure of Example 34 is followed, with the difference that 300 ml/hour of a solution of dichloroethane (DCE) in cyclohexane (2.08 mg/h dichloroethane) are additionally fed into the triethylaluminium (TEA) line. The point of introduction into the triethylaluminium line is about 10 seconds from the point of introduction into the reactor. The DCE/TEA molar ratio is 0.3/1 and the DCE/(Ti+V) molar ratio is 0.6/1.

Polymerizing at 241°C, 103.5 g/hour of an ethylene polymer are obtained, corresponding to an ethylene conversion of 92%, with productivity 13.24, yield (Ti) 185 and yield (V) 87.0.

The polyethylene has the following characteristics: melt index 0.1 g/10 min, shear sensitivity 24, and density 0.9472 g/ml.

EXAMPLE 36 (comparison)

The procedure of Example 34 is followed, but additionally feeding 300 ml/hour of a solution of 1-butene in hexane (50.62 g/hour of butene, butene/ethylene weight ratio 0.45/1) into the reactor through a separate line.

Copolymerizing at 228°C, 51.36 g/hour of an ethylene/butene copolymer are obtained, corresponding to an ethylene conversion of 42%, with copolymer productivity 6.57, yield (Ti) 91.71 and yield (V) 43.52.

The copolymer has the following characteristics: melt index 0.63 g/10 min, shear sensitivity 24, and density 0.920 g/ml.

EXAMPLE 37

The procedure of Example 36 is followed, with the difference that 300 ml/hour of a solution of dichloroethane (DCE) in cyclohexane (2.08 mg/h dichloroethane) are additionally fed into the triethylaluminium (TEA) line. The DCE/TEA molar ratio is 0.3/1 and the DCE/(Ti+V) molar ratio is 0.6/1.

Copolymerizing at 233°C, 98.43 g/hour of an ethylene/butene copolymer are obtained, corresponding to an ethylene conversion of 77%, with copolymer productivity 12.6, yield (Ti) 175.7 and yield (V) 83.41.

The copolymer has the following characteristics: melt index 1.17 g/10 min, shear sensitivity 26, and density 0.909 g/ml.

EXAMPLE 38

The procedure of Example 37 is followed, but additionally feeding 300 ml/hour of a solution of 1-butene in hexane (50.62 g/hour of butene, butene/ethylene weight ratio 0.35/1) into the reactor through a separate line.

Copolymerizing at 234°C, 102.5 g/hour of an ethylene/butene copolymer are obtained, corresponding to an ethylene conversion of 82%, with copolymer productivity 13.11, yield (Ti) 183 and yield (V) 86.86.

The copolymer has the following characteristics: melt index 1.0 g/10 min, shear sensitivity 26, and density 0.920 g/ml.

EXAMPLE 39 (comparison)

1900 ml of anhydrous n-heptane, 68 mg of triethylaluminium and 0.44 ml of the catalytic suspension obtained as described in Example 1 containing 0.97 mg of titanium are fed in that order into a 5 litre agitated reactor (Al/(Ti+V) molar ratio = 16/1). The reactor temperature is raised to 90°C, then hydrogen is fed in to 2 atm. gauge pressure followed by ethylene to 6 atm. gauge pressure. The pressure is maintained by feeding ethylene for 1 hour. After this period the polymerization is interrupted by introducing 20 ml of solution of 10 wt% ionol (2,6-di-tert-butyl-p-cresol) in alcohol.

A polyethylene is recovered with productivity 15.7, yield (Ti) 87, and yield (V) 163.

The polymer has the following characteristics: melt index 0.10 g/10 min, shear sensitivity 44.

EXAMPLE 40

The procedure of Example 39 is followed, using 0.45 ml of the catalytic suspension obtained as described in Example 2 containing 0.97 mg of titanium (Al/(Ti+V) molar ratio = 16/1).

A polyethylene is recovered with productivity 33, yield (Ti) 168, and yield (V) 316.

The polymer has the following characteristics: melt index 0.16 g/10 min, shear sensitivity 39.7.

EXAMPLE 41

The procedure of Example 39 is followed, using 0.4 ml of the catalytic suspension obtained as described in Example 1, to which 5.93 mg of dichloroethane (DCE) are added before feeding it to the pressure vessel (DCE/TEA molar ratio = 0.15/1).

A polyethylene is recovered with productivity 19.8, yield (Ti) 112, and yield (V) 211.

The polymer has the following characteristics: melt index 0.16 g/10 min, shear sensitivity 44.

EXAMPLE 42

The procedure of Example 39 is followed, using 0.88 ml of the catalytic suspension obtained as described in Example 3 containing 0.97 mg of titanium (Al/(Ti+V) molar ratio = 6.4/1).

A polyethylene is recovered with productivity 15.9, yield (Ti) 195, and yield (V) 91.8.

The polymer has the following characteristics: melt index 0.42 g/10 min, shear sensitivity 36.

EXAMPLE 43

The procedure of Example 39 is followed, using 0.88 ml of the catalytic suspension obtained as described in Example 4 containing 0.97 mg of titanium (Al/(Ti+V) molar ratio = 6.4/1).

A polyethylene is recovered with productivity 42, yield (Ti) 422, and yield (V) 199.

The polymer has the following characteristics: melt index 0.24 g/10 min, shear sensitivity 37.

EXAMPLE 44 (comparison)

The procedure of Example 39 is followed, using 0.69 ml of the catalytic suspension obtained as described in Example 5 containing 0.97 mg of titanium (Al/(Ti+V) molar ratio = 12.5/1).

A polyethylene is recovered with productivity 6.9, yield (Ti) 60, and yield (V) 57.

The polymer has the following characteristics: melt index 0.15 g/10 min, shear sensitivity 41.

EXAMPLE 45

The procedure of Example 39 is followed, using 0.69 ml of the catalytic suspension obtained as described in Example 6 containing 0.97 mg of titanium (Al/(Ti+V) molar ratio = 12.5/1).

A polyethylene is recovered with productivity 18.1, yield (Ti) 123, and yield (V) 116.

The polymer has the following characteristics: melt index 0.24 g/10 min, shear sensitivity 36.

EXAMPLE 46

The procedure of Example 39 is followed, using 0.44 ml of the catalytic suspension obtained as described in Example 1 containing 0.97 mg of titanium (Al/(Ti+V) molar ratio = 16/1), and 6.2 mg of methyl trichloroacetate (TCAM) with a TCAM/TEA molar ratio of 0.1.

A polyethylene is recovered with productivity 25, yield (Ti) 141, and yield (V) 264.

The polymer has the following characteristics: melt index 0.21 g/10 min, shear sensitivity 38.6.

EXAMPLE 47

The procedure of Example 39 is followed, using 0.88 ml of the catalytic suspension obtained as described in Example 3 containing 0.97 mg of titanium (Al/(Ti+V) molar ratio = 6.4/1), and 6.2 mg of methyl trichloroacetate (TCAM) with a TCAM/TEA molar ratio of 0.1.

A polyethylene is recovered with productivity 22.6, yield (Ti) 276, and yield (V) 130.

The polymer has the following characteristics: melt index 0.56 g/10 min, shear sensitivity 42.

EXAMPLE 48

The procedure of Example 39 is followed, using 0.69 ml of the catalytic suspension obtained as described in Example 5 containing 0.97 mg of titanium (Al/(Ti+V) molar ratio = 12.5/1), and 6.2 mg of methyl trichloroacetate (TCAM) with a TCAM/TEA molar ratio of 0.1.

A polyethylene is recovered with productivity 17.4, yield (Ti) 146, and yield (V) 138.

The polymer has the following characteristics: melt index 0.39 g/10 min, shear sensitivity 46.

EXAMPLE 49

500 ml of anhydrous n-heptane, 0.2 g of triisobutylaluminium (TIBA) and 0.00375 g of 1,2-dichloroethane (DCE) are introduced in that order into an agitated 1 litre reactor (pressure vessel) in a propylene atmosphere, after which propylene is dissolved therein to a pressure of 4 $kg/cm^2$. Ethylene is fed in to a pressure of 5 $kg/cm^2$ (partial pressure of ethylene = 1 $kg/cm^2$) and 0.00132 g of solid catalyst component prepared as in Example 1 are introduced.

This gives the following molar ratios: Al/(Ti+V) = 67/1, DCE/(Ti+V) = 2.5/1 and DCE/TIBA = 0.04/1.

Polymerization is effected at 50°C for 30 minutes, maintaining the pressure at 5 $kg/cm^2$ by continuously feeding ethylene. After this time the polymerization is interrupted by introducing ethanol and degasing the dissolved gases. The contents are cooled to ambient temperature and the suspension coagulated with 2000 ml of methanol. After filtering and drying the solid cake, 8.3 g of ethylene/propylene copolymer are recovered, with productivity 6.29, yield (Ti) 43.5 and yield (V) 69.0.

The copolymer produced in this manner has the following values:

- intrinsic viscosity 5 dl/g, measured in decalin at 135°C;
- propylene content of copolymer 33.8 mol%.

EXAMPLE 50

The procedure of Example 49 is followed, feeding into the reactor 500 ml of anhydrous n-heptane, 0.2 g of triisobutylalumininum (TIBA), 0.00187 g of 1,2-dichloroethane (DCE) and 0.00285 g of solid catalyst component prepared as in Example 3. This gives the following molar ratios: Al/(Ti+V) = 133/1, DCE/(Ti+V) = 2.5/1 and DCE/TIBA = 0.019/1.

Polymerization is effected as in Example 49, to obtain 10.5 g of ethylene/propylene copolymer, with productivity 3.68, yield (Ti) 43 and yield (V) 21.5.

The copolymer produced in this manner has the following values:

- intrinsic viscosity 4.7 dl/g, measured in decalin at 135°C;
- propylene content of copolymer 38.3 mol%.

**Claims**

**1.** A process for ethylene polymerization and the copolymerization of ethylene with a $C_3$-$C_{10}$ alpha-olefin, characterised by using for the polymerization a catalytic composition formed from:

i) a solid catalyst component (procatalyst) containing titanium, vanadium and chlorine in the following molar proportions:

Ti (1), V (0.3-3), Cl (4-12);

obtained by interacting titanium tetrachloride, a vanadium arene and possibly vanadium tetrachloride, in accordance with the reaction:

$$TiCl_4 + mV(Ar)_2 + nVCl_4 \rightarrow TiV_{(m+n)}Cl_{(4+4n)} + 2mAr$$

where:

- Ar is an arene chosen from benzene and benzene substituted with 1 to 3 alkyl groups,
- m is a number variable from 0.3 to 1,
- n is a number variable from 0 to 2,

with the condition that the ratio m:n is in the range from 1:0 to 1:2;

ii) a trialkylaluminium or an alkylaluminium chloride cocatalyst; and

iii) an organic chlorine derivative activator chosen from:

a) di- or poly-chloroalkanes

- alpha,beta-dichloroalkanes, as represented by the following formula:

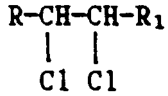

where R and $R_1$ independently represent a hydrogen atom or a $C_1$-$C_{10}$ (preferably $C_1$-$C_5$) alkyl group;
- alpha,omega-dichloroalkanes, as represented by the following formula:

$$Cl\text{-}CH_2\text{-}(CH_2)_r\text{-}CH_2\text{-}Cl$$

where r is a whole number from 1 to 10 (preferably from 1 to 5);
- trichloroalkanes or tetrachloroalkanes carrying the chlorine atoms on the two terminal carbons, as represented by the formula:

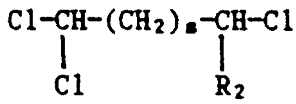

where $R_2$ represents a halogen or chlorine atom and s is a whole number from 1 to 10 (preferably 1 to 5);
- trichloroalkanes carrying the chlorine atoms on one terminal carbon, as represented by the formula:

$$(Cl)_3\text{-}C\text{-}R_3$$

where $R_3$ represents a $C_1$-$C_{10}$ (preferably $C_1$-$C_5$) alkyl group;

b) alkyl esters of aliphatic carboxylic acids di- or tri-chlorine substituted on the carbon in the alpha position relative to the carboxyl, and

c) monochloro triphenylmethane or dichloro diphenylmethane carrying a carboxyalkyl group in the para position of at least one of the phenyl rings ;

- the atomic ratio of aluminium (in the cocatalyst) to the sum of titanium and vanadium (in the procatalyst), Al/(Ti+V), varies from 0.5:1 to 200:1;
- the ratio of moles of activator iii) to the sum of the titanium and vanadium atoms (in the procatalyst), (iii)/(Ti+V), varies from 0.3:1 to 3:1;
- the ratio of moles of activator iii) to atoms of aluminium (in the cocatalyst), (iii)/Al, varies from 0.01:1 to 10:1.

**2.** A process as claimed in claim 1, characterised in that said procatalyst i) is preformed outside the polymerization environment by contact between a solution of a vanadium arene $V(Ar)_2$, where Ar indicates benzene, toluene, p-xylene or mesitylene, in an inert organic solvent, and a solution of titanium tetrachloride and possible also vanadium tetrachloride in an inert organic solvent, operating at ambient temperature (20-25°C) or at higher then ambient temperature up to the boiling point of the solvent used, for a time of between 10 seconds and 3 hours.

**3.** A process as claimed in claim 1, characterised in that said procatalyst i) is formed within the polymerization environment by mixing together and feeding to said environment a stream of vanadium arene solution in an inert solvent and a stream of titanium tetrachloride and possibly also vanadium tetrachloride solution in an inert solvent.

**4.** A process as claimed in claim 1, characterised in that said procatalyst i) is chosen from those definable by the following formula, in atomic proportions:

Ti (1), V (0.3), Cl (4);
Ti (1), V (0.5), Cl (4);
Ti (1), V (1), Cl (4);
Ti (1), V (2), Cl (8);
Ti (1), V (3), Cl (12).

**5.** A process as claimed in claim 1, characterised in that said cocatalyst ii) is a trialkylaluminium or an alkylaluminium chloride containing from 1 to 8 and preferably from 1 to 4 carbon atoms in the alkyl portion, and is preferably triethylaluminium.

**6.** A process as claimed in claim 1, characterised in that said activator iii) is chosen from 1,2-dichloroethane, 1,4-dichlorobutane, 2,3-dichlorobutane, 1,1,3-trichloropropane, 1,4-dichloropentane, 1,6-dichlorohexane, 1,1,1-trichloroethane and 1,1,2-trichloro-ethane, and is preferably 1,2-dichloroethane or 2,3-dichloro-butane.

**7.** A process as claimed in claim 1, characterised in that said activator iii) is chosen from alkyl esters of aliphatic carboxylic acids di- or tri-chlorine substituted on the carbon in the alpha position relative to the carboxyl, definable by the formula:

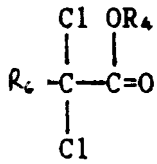

where $R_6$ represents a hydrogen atom, a chlorine atom or a $C_1$-$C_{10}$ (preferably $C_1$-$C_5$) alkyl group, and $R_4$ represents a $C_1$-$C_{10}$ (preferably $C_1$-$C_5$) alkyl group.

**8.** A process as claimed in claim 7, characterised in that said activator iii) is chosen from methyl and ethyl esters of 1,1-dichloroacetic and 1,1,1-trichloroacetic acid.

**9.** A process as claimed in claim 1, characterised in that said activator iii) is monochloro triphenylmethane or dichloro diphenylmethane carrying a carboxyalkyl group in the para position of at least one of the phenyl rings, definable by the formula:

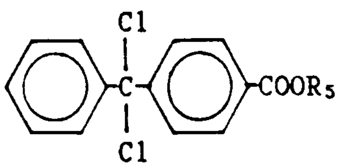

or

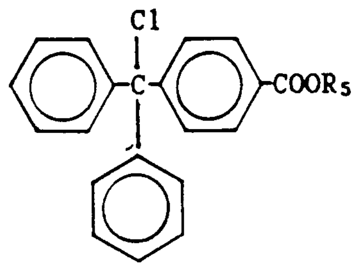

where $R_5$ represents a $C_1$-$C_{10}$ (preferably $C_1$-$C_5$) alkyl group.

**10.** A process as claimed in claim 1, characterised in that said activator iii) is added to the polymerization environment either as a separate feed or jointly with the cocatalyst ii) or with the procatalyst i) or with the precursors of said cocatalyst i); or is introduced into the procatalyst i) during the preparation of said procatalyst i) by contact with the reagents vanadium arene, titanium tetrachloride and possibly vanadium tetrachloride.

**11.** A process as claimed in claim 1, characterised in that the alpha-olefin is chosen from 1-butene and 1-hexene.

**Patentansprüche**

**1.** Verfahren zur Polymerisation von Ethylen und zur Copolymerisation von Ethylen mit einem $C_3$-$C_{10}$-$\alpha$-Olefin, dadurch gekennzeichnet, daß für die Polymerisation eine Katalysatorzusammensetzung verwendet wird, die hergestellt ist aus:

i) einer festen Katalysatorkomponente (Prokatalysator), die Titan, Vanadium und Chlor in folgenden Molverhältnissen enthält:

Ti (1), V (0,3 - 3), Cl (4 - 12),

die durch Wechselwirkung von Titantetrachlorid, Vanadiumaren und möglicherweise Vanadiumtetrachlorid gemäß der Reaktion

$$TiCl_4 + mV(Ar)_2 + nVCl_4 \rightarrow TiV_{(m+n)}Cl_{(4+4n)} + 2mAr$$

erhalten wird, worin

- Ar ein Aren ist, ausgewählt aus Benzol und mit 1 bis 3 Alkylgruppen substiuiertem Benzol,
- m eine variable Zahl von 0,3 bis 1 ist,
- n eine variable Zahl von 0 bis 2 ist, unter der Bedingung, daß das Verhältnis m:n im Bereich von 1:0 bis 1:2 liegt,

ii) einem Trialkylaluminium- oder Alkylaluminiumchlorid-Cokatalysator; und
iii) einem Aktivator aus einem organischen Chlorderivat, ausgewählt aus:

a) Di- oder Polychloralkanen,

- $\alpha$,$\beta$-Dichloralkanan der nachstehenden Formel:

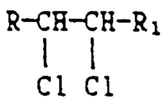

worin R und $R_1$ unabhängig voneinander ein Wasserstoffatom oder eine $C_1$-$C_{10}$-Alkylgruppe (vorzugsweise eine $C_1$-$C_5$-Alkylgruppe) darstellen;
- $\alpha$,$\omega$-Dichloralkanen der nachstehenden Formel:

$$Cl\text{-}CH_2\text{-}(CH_2)_r\text{-}CH_2\text{-}Cl$$

worin r eine ganze Zahl von 1 bis 10 (vorzugsweise von 1 bis 5) ist;
- Trichloralkanen oder Tetrachloralkanen, die an den beiden endständigen Kohlenstoffatomen Chloratome tragen, der Formel

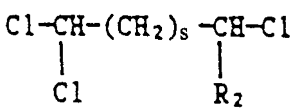

worin $R_2$ ein Halogen- oder Chloratom ist und s eine ganze Zahl von 1 bis 10 (vorzugsweise 1 bis 5) ist;
- Trichloralkanen, die an einem endständigen Kohlenstoffatom Chloratome tragen, der Formel:

$$(Cl)_3\text{-}C\text{-}R_3$$

worin $R_3$ eine $C_1$-$C_{10}$-Alkylgruppe (vorzugsweise eine $C_1$-$C_5$-Alkylgruppe) ist;

b) Alkylestern von aliphatischen Carbonsäuren, die an dem sich in α-Stellung zur Carboxylgruppe befindenden Kohlenstoffatom mit Chlor di- oder trisubstituiert sind, und

c) Monochlortriphenylmethan oder Dichlordiphenylmethan, mit einer Carboxyalkylgruppe in der p-Stellung von mindestens einem der Phenyleringe;

- wobei das Atomverhältnis von Aluminium (im Cokatalysator) zur Summe von Titan und Vanadium (im Prokatalysator), Al/(Ti+V), von 0,5:1 bis 200:1 variiert;
- wobei das Verhältnis der Mole des Aktivators iii) zur Summe der Titan- und Vanadiumatome (im Prokatalysator), (iii)/(Ti+V), von 0,3:1 bis 3:1 variiert;
- wobei das Verhältnis der Mole des Aktivators iii) zu den Aluminiumatomen (im Cokatalysator), (iii)/Al, von 0,01:1 bis 10:1 variiert.

**2.** Verfahren nach Anspruch 1, dadurch gekennzeichnet, daß der Prokatalysator i) außerhalb der Polymerisationsumgebung vorgefertigt wird, indem ein Kontakt zwischen einer Lösung eines Vanadiumarens $V(Ar)_2$, worin Ar Benzol, Toluol, p-Xylol oder Mesitylen ist, in einem inerten organischen Lösungsmittel, und einer Lösung von Titantetrachlorid und möglicherweise auch Vanadiumtetrachlorid in einem inerten organischen Lösungsmittel vorgenommen wird, wobei 10 Sekunden bis 3 Stunden lang bei Umgebungstemperatur (20 bis 25°C) oder oberhalb der Umgebungstemperatur bis zum Siedepunkt des verwendeten Lösungsmittels gearbeitet wird.

**3.** Verfahren nach Anspruch 1, dadurch gekennzeichnet, daß der Prokatalysator i) innerhalb der Polymerisationsumgebung erzeugt wird, indem ein Strom einer Vanadiumarelösung in einem inerten Lösungsmittel und ein Strom einer Titantetrachlorid und möglicherweise auch einer Vanadiumtetrachloridlösung in einem inerten Lösungsmittel miteinander vermischt und dieser Umgebung zugeführt werden.

**4.** Verfahren nach Anspruch 1, dadurch gekennzeichnet, daß der Prokatalysator i) aus jenen ausgewählt ist, die durch die nachstehende Formel, in Atomverhältnissen, definiert werden können:

Ti (1), V (0,3), Cl (4);
Ti (1), V (0,5), Cl (4);
Ti (1), V (1), Cl (4);
Ti (1), V (2), Cl (8);
Ti (1), V (3), Cl (12).

**5.** Verfahren nach Anspruch 1, dadurch gekennzeichnet, daß der Cokatalysator ii) ein Trialkylaluminium- oder Alkylaluminiumchlorid mit 1 bis 8 und vorzugsweise 1 bis 4 Kohlenstoffatomen im Alkylteil und vorzugsweise Triethylaluminium ist.

**6.** Verfahren nach Anspruch 1, dadurch gekennzeichnet, daß der Aktivator iii) aus 1,2-Dichlorethan, 1,4-Dichlorbutan, 2,3-Dichlorbutan, 1,1,3-Trichlorpropan, 1,4-Dichlorpentan, 1,6-Dichlorhexan, 1,1,1-Trichlorethan und 1,1,2-Trichlorethan ausgewählt ist und vorzugsweise 1,2-Dichlorethan oder 2,3-Dichlorbutan ist.

**7.** Verfahren nach Anspruch 1, dadurch gekennzeichnet, daß der Aktivator iii) aus Alkylestern aliphatischer Carbonsäuren ausgewählt ist, die an dem sich in α-Stellung zur Carboxylgruppe befindenden Kohlenstoffatom di- oder trichlorsubstituiert sind, die durch die Formel

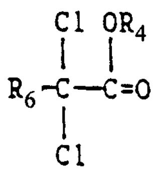

definiert werden können, worin $R_6$ ein Wasserstoffatom, ein Chloratom oder eine $C_1$-$C_{10}$-Alkylgruppe (vorzugsweise eine $C_1$-$C_5$-Alkylgruppe) ist und $R_4$ eine $C_1$-$C_{10}$-Alkylgruppe (vorzugsweise eine $C_1$-$C_5$-Alkylgruppe) ist.

**8.** Verfahren nach Anspruch 7, dadurch gekennzeichnet, daß der Aktivator iii) aus Methyl- und Ethylestern von 1,1-Dichloressigsäure und 1,1,1-Trichloressigsäure ausgewählt ist.

**9.** Verfahren nach Anspruch 1, dadurch gekennzeichnet, daß der Aktivator iii) Monochlortriphenylmethan oder Dichlordiphenylmethan mit einer Carboxyalkylgruppe in der p-Stellung von mindestens einem der Phenylringe ist, die durch die Formel

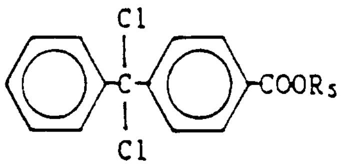 oder 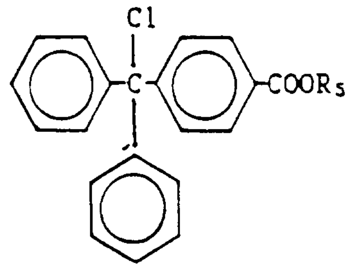

definiert werden können, worin $R_5$ eine $C_1$-$C_{10}$-Alkylgruppe (vorzugsweise eine $C_1$-$C_5$-Alkylgruppe) ist.

**10.** Verfahren nach Anspruch 1, dadurch gekennzeichnet, daß der Aktivator iii) der Polymerisationsumgebung entweder als getrennte Beschickung oder in Verbindung mit dem Cokatalysator ii) oder mit dem Prokatalysator i) oder mit Vorstufen des Cokatalysators i) zugesetzt wird oder während der Herstellung des Prokatalysators i) durch Kontakt der Reagenzien Vanadiumaren, Titantetrachlorid und möglicherweise Vanadiumtetrachlorid in den Prokcatalysator i) eingeführt wird.

**11.** Verfahren nach Anspruch 1, dadurch gekennzeichnet, daß das $\alpha$-Olefin aus 1-Buten und 1-Hexen ausgewählt ist.

**Revendications**

**1.** Procédé pour la polymérisation de l'éthylène et la copolymérisation de l'éthylène avec une alpha-oléfine en $C_3$ à $C_{10}$, caractérisé par l'utilisation, pour la polymérisation, d'une composition catalytique formée:

i) d'un composant catalytique solide (procatalyseur) contenant du titane, du vanadium et du chlore dans les proportions molaires suivantes:

Ti (1), V (0,3 à 3), Cl (4 à 12);

obtenues en faisant interréagir le tétrachlorure de titane, une arène de vanadium et probablement le tétrachlorure de vanadium, conformément à la réaction:

$$TiCl_4 + mV(Ar)_2 + nVCl_4 \rightarrow TiV_{(m+n)}Cl_{(4+4n)} + 2mAr$$

où:

- Ar est une arène choisie parmi le benzène et le benzène substitué avec 1 à 3 groupes alkyle;
- m est un nombre variable de 0,3 à 1;
- n est un nombre variable de 0 à 2 ; à la condition que le rapport m:n soit dans la gamme de 1:0 à 1:2;

ii) d'un cocatalyseur de chlorure de trialkylaluminium ou d'alkylaluminium; et
iii) d'un activateur à base d'un dérivé organochloré choisi parmi:

a) les di- ou polychloroalcanes

- les alpha-béta-dichloroalcanes, tels que représentés par la formule suivante:

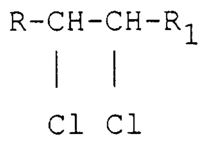

où R et $R_1$ représentent indépendamment un atome d'hydrogène ou un groupe alkyle en $C_1$ à $C_{10}$ (de préférence en $C_1$ à $C_5$);

- les alpha,oméga,dichloroalcanes, tels que représentés par la formule suivante:

$$Cl\text{-}CH_2\text{-}(CH_2)_r\text{-}CH_2\text{-}Cl$$

où r est un nombre entier de 1 à 10 (de préférence de 1 à 5);

- les trichloroalcanes ou les tétrachloroalcanes portant les atomes de chlore sur les deux atomes de carbone terminaux, tels que représentés par la formule:

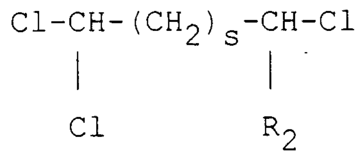

où $R_2$ représente un atome d'halogène ou de chlore et s est un nombre entier de 1 à 10 (de préférence de 1 à 5) ;

- les trichloroalcanes portant les atomes de chlore sur un atome de carbone terminal, tels que représentés par la formule :

$$(Cl)_3\text{-}C\text{-}R_3$$

où $R_3$ représente un groupe alkyle en $C_1$ à $C_{10}$ (de préférence en $C_1$ à $C_5$) ;

b) les esters alkyliques d'acides carboxyliques aliphatiques substitués par deux ou trois atomes de chlore sur l'atome de carbone en position alpha par rapport au carboxyle; et
c) le monochlorotriphénylméthane ou le dichlorodiphénylméthane portant un groupe carboxyalkyle en position para d'au moins un des noyaux phényle;

- le rapport atomique d'aluminium (dans le cocatalyseur) à la somme de titane et de vanadium (dans le procatalyseur), Al/(Ti+V), varie de 0,5:1 à 200:1;
- le rapport de moles d'activateur iii) à la somme des atomes de titane et de vanadium (dans le procatalyseur), (iii)/(Ti+V), varie de 0,3:1 à 3:1;
- le rapport de moles d'activateur aux atomes d'aluminium (dans le cocatalyseur), (iii)/Al, varie de 0,01:1 à 10:1.

**2.** Procédé selon la revendication 1, caractérisé en ce que ledit procatalyseur i) est préformé en dehors de l'environnement de la polymérisation par mise en contact entre une solution d'une arène de vanadium $V(Ar)_2$, où Ar indique le benzène, le toluène, le p-xylène ou le mésitylène, dans un solvant organique inerte, et une solution de tétrachlorure de titane et de tétrachlorure de vanadium également possible dans un solvant organique inerte, en opérant à la température ambiante (20 à 25°C) ou à une température supérieure à celle-ci jusqu'au point d'ébullition du solvant utilisé, pendant une durée comprise entre 10 secondes et 3 heures.

**3.** Procédé selon la revendication 1, caractérisé en ce que ledit procatalyseur i) est formé dans l'environnement de la polymérisation en mélangeant ensemble et en introduisant audit environnement un courant de solution d'arène de vanadium dans un solvant inerte et un courant de tétrachlorure de titane et probablement également une solution de tétrachlorure de vanadium dans un solvant inerte.

**4.** Procédé selon la revendication 1, caractérisé en ce que ledit procatalyseur i) est choisi parmi ceux définissables par la formule suivante, dans des proportions atomiques:

Ti (1), V (0,3), Cl (4);
Ti (1), V (0,5), Cl (4);
Ti (1), V (1), Cl (4);
Ti (1), V (2), Cl (8);
Ti (1), V (3), Cl (12).

**5.** Procédé selon la revendication 1, caractérisé en ce que ledit cocatalyseur ii) est un chlorure de trialkylaluminium ou d'alkylaluminium contenant de 1 à 8 et de préférence de 1 à 4 atomes de carbone dans la portion alkyle, et est de préférence le triéthylaluminium.

**6.** Procédé selon la revendication 1, caractérisé en ce que ledit activateur iii) est choisi parmi le 1,2-dichloroéthane, le 1,4-dichlorobutane, le 2,3-dichlorobutane, le 1,1,3-trichloropropane, le 1,4-dichloropentane, le 1,6-dichlorohexane, le 1,1,1-trichloroéthane et le 1,1,2-trichloroéthane, et est de préférence le 1,2-dichloroéthane ou le 2,3-dichlorobutane.

**7.** Procédé selon la revendication 1, caractérisé en ce que ledit activateur iii) est choisi parmi les esters alkyliques d'acides carboxyliques aliphatiques substitués par deux ou trois atomes de chlore sur l'atome de carbone en position alpha par rapport au carboxyle, définissable par la formule:

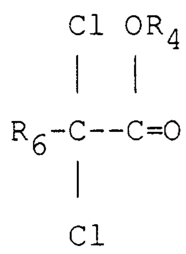

où $R_6$ représente un atome d'hydrogène, un atome de chlore ou un groupe alkyle en $C_1$ à $C_{10}$ (de préférence en $C_1$ à $C_5$), et $R_4$ représente un groupe alkyle en $C_1$ à $C_{10}$ (de préférence, en $C_1$ à $C_5$).

**8.** Procédé selon la revendication 7, caractérisé en ce que ledit activateur iii) est choisi parmi les esters méthylique et éthylique des acides 1,1 dichloroacétique et 1,1,1-trichloroacétique.

**9.** Procédé selon la revendication 1, caractérisé en ce que ledit activateur iii) est un monochlorotriphénylméthane ou dichlorodiphénylméthane portant un groupe carboxyalkyle en position para d'au moins un des cycles phényle, définissable par la formule:

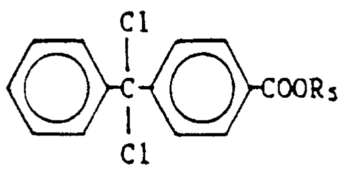

ou

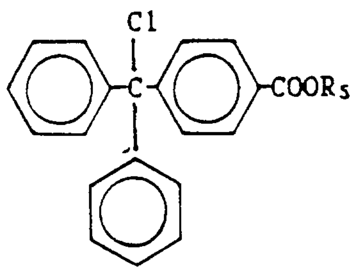

où $R_5$ représente un groupe alkyle en $C_1$ à $C_{10}$ (de préférence, en $C_1$ à $C_5$).

**10.** Procédé selon la revendication 1, caractérisé en ce que ledit activateur iii) soit est ajouté à l'environnement de la

polymérisation, comme alimentation séparée ou conjointement avec le cocatalyseur ii) ou avec le procatalyseur i) ou avec les précurseurs dudit cocatalyseur i); soit est introduit dans le procatalyseur i) pendant la préparation dudit procatalyseur i) par mise en contact avec les réactifs, l'arène de vanadium, le tétrachlorure de titane et probablement le tétrachlorure de vanadium.

**11.** Procédé selon la revendication 1, caractérisé en ce que l'alpha-oléfine est choisie parmi le 1-butène et le 1-hexène.